# EUROPÄISCHE PATENTSCHRIFT

(11) **EP 3 076 504 B1**
(45) Veröffentlichungstag und Bekanntmachung des Hinweises auf die Patenterteilung: **04.07.2018**
(21) Anmeldenummer: 15162092.9
(22) Anmeldetag: 31.03.2015
(51) Int. Cl.: H02B 1/21, H02B 1/052, H01H 85/20, H02B 1/056, H01R 13/688

(54) **ADAPTERVORRICHTUNG FÜR EIN STROMSAMMELSCHIENENSYSTEM**
ADAPTER DEVICE FOR A BUSBAR SYSTEM
DISPOSITIF ADAPTATEUR POUR UN SYSTÈME DE BARRE OMNIBUS

(43) Veröffentlichungstag der Anmeldung: 05.10.2016
(73) Patentinhaber: Wöhner GmbH & Co. KG Elektrotechnische Systeme, 96472 Rödental (DE)
(72) Erfinder: Steinberger, Philipp, 96450 Coburg (DE); Lenker, Hubert, 96515 Sonneberg (DE)
(74) Vertreter: Isarpatent

(56) Entgegenhaltungen:
- EP-A1- 2 866 319
- DE-C1- 3 642 518
- DE-C1- 19 530 659
- NL-A- 9 201 293
- US-A1- 2011 117 783

## Beschreibung

Die Erfindung betrifft eine Adaptervorrichtung zum Anschluss mindestens eines elektrischen oder elektronischen Gerätes an ein Stromsammelschienensystem.

In der DE 36 42 518 C1 ist ein dreiphasiges Sammelschienensystem mit drei Stromsammelschienen offenbart, die in vorgegebenem Abstand parallel zueinander verlaufend in Sammelschienenhaltern gehalten und im Abstand von einer Befestigungswand im Schaltschrank oder dgl. gehalten sind. Ein Geräteadapter umfasst ein Adaptergehäuse, das mit seiner Längsabmessung quer zu den Stromsammelschienen gerichtet ist und die äußeren Stromsammelschienen außen umgreift. Das Adaptergehäuse weist eine Gehäuseplatte auf, auf deren Unterseite Befestigungsblöcke angeformt sind. An diesen Befestigungsblöcken sind mittels Schrauben die drei Kontaktschienen befestigt.

Weiter ist in der EP 2 866 319 A1 ein Sammelschienenadapter zum Kontaktieren von zumindest einer ersten und einer zweiten Sammelschiene bekannt. Der Sammelschienenadapter weist zumindest eine erste Stromzuleitung und eine zweite Stromzuleitung; zumindest eine erste Kontaktverbindung und eine zweite Kontaktverbindung, um eine Verbindung zu den zumindest zwei Sammelschienen herzustellen; eine Sicherungseinheit mit zumindest einer ersten Sicherungshalterung und einer zweiten Sicherungshalterung und eine Gehäusestruktur zum Unterbringen der Sicherungseinheit und der ersten und zweiten Kontaktverbindungen auf.

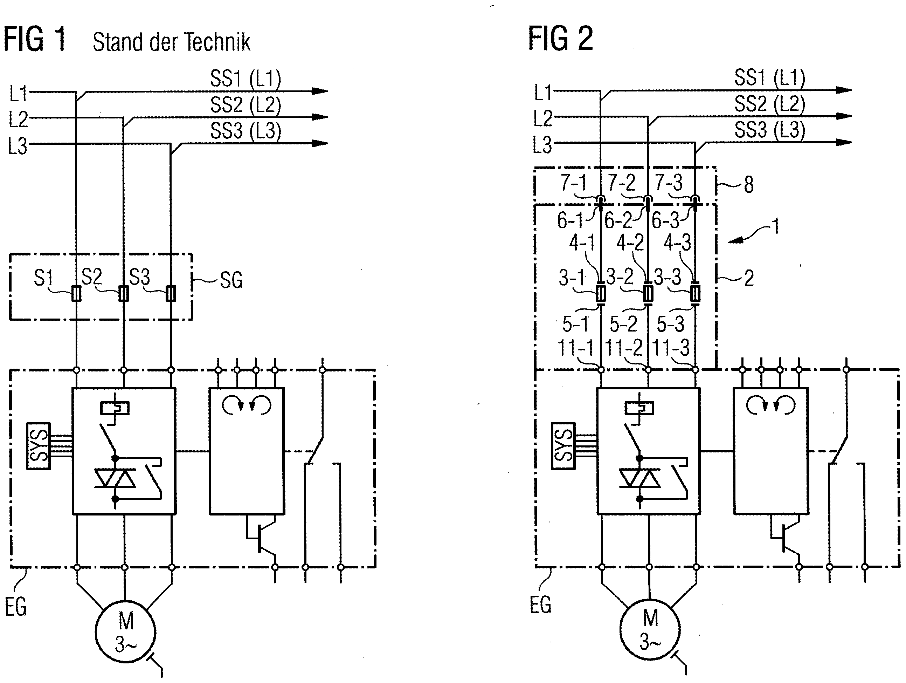

Fig. 1 zeigt eine herkömmliche Anordnung zum Anschluss eines elektrischen oder elektronischen Gerätes an ein Stromsammelschienensystem. Das in Fig. 1 dargestellte Stromsammelschienensystem weist drei parallel angeordnete Stromsammelschienen SS1, SS2, SS3 auf, um drei verschiedene Stromphasen L1, L2, L3 zu führen. Ein elektronisches Gerät EG ist über eine Sicherungseinheit bzw. ein Sicherungsgerät SG an das Stromsammelschienensystem angeschlossen. Bei dem in Fig. 1 dargestellten Beispiel steuert das elektronische Gerät EG einen Motor M. Das Sicherungsgerät SG verfügt über drei Sicherungen bzw. Sicherungselemente S1, S2, S3 zur Absicherung der drei verschiedenen Stromphasen L1, L2, L3. Das Sicherungsgerät SG ist bei der herkömmlichen Anordnung zwischen dem elektronischen Gerät EG und dem Stromsammelschienensystem verschaltet, wie in Fig. 1 dargestellt. Die herkömmliche Schaltungsanordnung gemäß Fig. 1 hat verschiedene Nachteile. Der Aufwand zur Verkabelung bzw. zur Herstellung der elektrischen Kontakte ist hoch, sodass der Montageaufwand, insbesondere der Zeitaufwand für die Montage relativ groß ist. Bei dem in Fig. 1 dargestellten Beispiel verfügt das Sicherungsgerät beidseitig über jeweils drei elektrische Kontakte, d.h. insgesamt sechs elektrische Kontakte, die seitens des Monteurs hergestellt werden müssen. Wird nur einer dieser elektrischen Kontakte seitens des Monteurs nicht korrekt hergestellt, funktioniert das elektrische Gerät EG nicht und somit auch die gesamte in Fig. 1 dargestellte Schaltungsanordnung. Ein weiterer Nachteil der in Fig. 1 dargestellten herkömmlichen Schaltungsanordnung besteht darin, dass die Sicherungen über separate Leitungen mit dem elektrischen Gerät EG verbunden sind und sie beidseitig kontaktiert werden müssen.

Es ist daher eine Aufgabe der vorliegenden Erfindung, eine Adaptervorrichtung zu schaffen, die einen sicheren Anschluss eines elektrischen oder elektronischen Gerätes an ein Stromsammelschienensystem mit geringem Montageaufwand erlaubt.

Diese Aufgabe wird erfindungsgemäß durch eine Adaptervorrichtung mit den in Patentanspruch 1 angegebenen Merkmalen gelöst.

Bei der indirekten Kontaktierung der Stromsammelschiene ist der Geräteadapter mit Steckkontakten zur elektrischen Verbindung der Adaptervorrichtung mit einem Sammelschienen-Adapter ausgestattet.

Die erfindungsgemäße Adaptervorrichtung gewährleistet, dass die komplette Anordnung deutlich platzsparender realisiert werden kann, da Sicherungen in den Adapter integriert sind.

Die erfindungsgemäße Adaptervorrichtung bietet den Vorteil, dass das elektrische bzw. elektronische Gerät mit geringem Montageaufwand schnell und elektrisch sicher mit dem Stromsammelschienensystem verbunden werden kann.

Bei einer möglichen Ausführungsform der erfindungsgemäßen Adaptervorrichtung weist die Gerätebefestigungseinrichtung, die zum Aufsetzen des Gerätes auf das Adaptergehäuse dient, eine an dem Adaptergehäuse angebrachte Hutschiene auf.

Bei einer weiteren möglichen Ausführungsform der erfindungsgemäßen Adaptervorrichtung ist die Gerätebefestigungseinrichtung an das Adaptergehäuse angeformt.

Bei einer möglichen Ausführungsform der erfindungsgemäßen Adaptervorrichtung sind die in dem Adaptergehäuse vorgesehenen Sicherungselemente Schmelzsicherungen.

Bei der erfindungsgemäßen Adaptervorrichtung weist das Adaptergehäuse eine Aufnahmekammer zur Aufnahme der Sicherungselemente auf, wobei an die Aufnahmekammer ein Steg angeformt ist, der die Gerätebefestigungseinrichtung, die zum Aufsetzen des elektronischen oder elektrischen Gerätes vorgesehen ist, trägt.

Bei einer weiteren möglichen Ausführungsform der erfindungsgemäßen Adaptervorrichtung weist die Aufnahmekammer des Adaptergehäuses zur Aufnahme der Sicherungselemente, insbesondere der Schmelzsicherung, mindestens ein darin integriertes elektrisches Aufnahmekontaktpaar zum Einsetzen eines Sicherungselementes auf.

Bei einer möglichen Ausführungsform der erfindungsgemäßen Adaptervorrichtung ist ein erster Aufnahmekontakt des Aufnahmekontaktpaares, in welches ein Sicherungselement eingesetzt werden kann, über eine innerhalb des Adaptergehäuses verlaufende Stromverbindung mit einem an dem Adaptergehäuse angebrachten Kontakt zur Kontaktierung einer Stromsammelschiene des Stromsammelschienensystems elektrisch verbunden.

Neben der direkten Sammelschienenkontaktierung kann auch eine mögliche Kontaktierung des Geräteadapters mit einem Sammelschienenadapter erfolgen.

Bei einer weiteren möglichen Ausführungsform der erfindungsgemäßen Adaptervorrichtung ist ein zweiter Aufnahmekontakt des Aufnahmekontaktpaares, in welches ein Sicherungselement eingesetzt werden kann, mit einer Anschlussleitung für den elektrischen Anschluss des elektrischen oder elektronischen Gerätes vorgesehen.

Bei einer weiteren möglichen Ausführungsform der erfindungsgemäßen Adaptervorrichtung sind die Sicherungselemente über eine in der Aufnahmekammer des Adaptergehäuses vorgesehene Klappe manuell austauschbar.

Bei einer weiteren möglichen Ausführungsform der erfindungsgemäßen Adaptervorrichtung sind die Kontakte zur elektrischen Kontaktierung der Stromsammelschienen in entsprechende Kontaktöffnungen eines Kontaktöffnungsrasters der Stromsammelschienen einführbar.

Bei einer möglichen Ausführungsform der erfindungsgemäßen Adaptervorrichtung sind die Kontakte zur elektrischen Kontaktierung der Stromsammelschienen selbstfedernd ausgebildet.

Bei einer weiteren möglichen alternativen Ausführungsform der erfindungsgemäßen Adaptervorrichtung sind die Kontakte zur elektrischen Kontaktierung der Stromsammelschienen mittels einer Feder fremdgefedert ausgebildet.

Bei einer weiteren möglichen Ausführungsform der erfindungsgemäßen Adaptervorrichtung sind an dem Adaptergehäuse Rastmittel zum mechanischen Aufrasten des Adaptergehäuses auf die Stromsammelschienen des Stromsammelschienensystems vorgesehen.

Bei einer weiteren möglichen Ausführungsform der erfindungsgemäßen Adaptervorrichtung weisen die Rastmittel Rastnasen auf, die durch Öffnungen des Adaptergehäuses herausragen.

Bei einer weiteren möglichen Ausführungsform der erfindungsgemäßen Adaptervorrichtung lässt sich das Rastmittel zum Ver- und Entriegeln des auf die Stromsammelschienen aufgerasteten Adaptergehäuses lateral verschieben.

Bei einer weiteren möglichen Ausführungsform der erfindungsgemäßen Adaptervorrichtung ist das Rastmittel mittels eines an einer Stirnseite des Adaptergehäuses vorgesehenen Betätigungselementes zum Ver- und Entriegeln des auf die Stromsammelschienen aufgerasteten Adaptergehäuses durch einen Benutzer betätigbar.

Bei einer weiteren möglichen Ausführungsform der erfindungsgemäßen Adaptervorrichtung ist das Adaptergehäuse schmal ausgebildet und besteht aus einem elektrisch isolierenden Kunststoff.

Bei einer weiteren möglichen Ausführungsform der erfindungsgemäßen Adaptervorrichtung weist das Adaptergehäuse eine schmale Stirnseite mit einer Breite von 22,5 mm oder einer Breite von 18, 36, 45 mm auf.

Bei einer weiteren möglichen Ausführungsform der erfindungsgemäßen Adaptervorrichtung sind an die Anschlussleitungen der Adaptervorrichtung angebrachte Gerätestecker in entsprechende Gerätebuchsen mindestens eines auf die Adaptervorrichtung aufgesetzten elektrischen oder elektronischen Gerätes manuell einsteckbar.

Bei einer weiteren möglichen Ausführungsform der erfindungsgemäßen Adaptervorrichtung ist das auf die Gerätebefestigungseinrichtung der Adaptervorrichtung manuell aufsetzbare Gerät ein elektrisches oder elektronisches Gerät, insbesondere ein Motorsteuergerät, ein Schutzschalter, ein Netzteil oder ein Messgerät.

Die Erfindung schafft ferner gemäß einem weiteren Aspekt ein Stromsammelschienensystem mit mehreren im Wesentlichen parallel zueinander verlaufenden Stromsammelschienen, die jeweils ein Kontaktöffnungsraster mit Kontaktöffnungen aufweisen, in welche Kontakte einer Adaptervorrichtung zum Anschluss mindestens eines darauf aufgesetzten Gerätes an das Stromsammelschienensystem eingeführt sind, wobei die Adaptervorrichtung ein Adaptergehäuse aufweist, in dem für jede Stromsammelschiene ein zugehöriges Sicherungselement zur elektrischen Absicherung des jeweiligen Gerätes vorgesehen ist, wobei an dem Adaptergehäuse einerseits Kontakte zur elektrischen Kontaktierung der Stromsammelschienen angebracht sind, die mit den Sicherungselementen verbunden sind, und andererseits Anschlussleitungen für das elektrische Verbinden des jeweiligen Gerätes mit den Sicherungselementen der Adaptervorrichtung vorgesehen sind, wobei an dem Adaptergehäuse mindestens eine Gerätebefestigungseinrichtung zum Aufsetzen des Gerätes auf das Adaptergehäuse vorgesehen ist.

Bei einer möglichen Ausführungsform des erfindungsgemäßen Stromsammelschienensystems sichern die in dem Adaptergehäuse der Adaptervorrichtung vorgesehenen Sicherungselemente das an das Stromsammelschienensystem angeschlossene Gerät individuell elektrisch ab.

Bei einer weiteren möglichen Ausführungsform des erfindungsgemäßen Stromsammelschienensystems ist für jede Stromphase ein zugehöriges Sicherungselement zur elektrischen Absicherung des jeweiligen Gerätes in dem Adaptergehäuse der Adaptervorrichtung vorgesehen.

Bei einer weiteren möglichen Ausführungsform des erfindungsgemäßen Stromsammelschienensystems weisen die Stromsammelschienen des Stromsammelschienensystems ein U-förmiges Profil auf. Dieses Profil weist bei einer möglichen Ausführungsform zwei Seitenwangen auf.

Bei einer anderen Ausführungsform kann das Gerät auch auf klassische Sammelschienen aufgesetzt werden.

Im Weiteren werden mögliche Ausführungsformen der erfindungsgemäßen Adaptervorrichtung und des erfindungsgemäßen Stromsammelschienensystems unter Bezugnahme auf die beigefügten Figuren näher erläutert.

Es zeigen:
- Fig. 1: eine herkömmliche Schaltungsanordnung mit einer separaten Absicherung
- Fig. 2: eine beispielhafte Schaltungsanordnung, bei der eine Ausführungsform der erfindungsgemäßen Adaptervorrichtung verwendet wird;
- Fig. 3: eine perspektivische Ansicht auf ein Ausführungsbeispiel der erfindungsgemäßen Adaptervorrichtung mit einem darauf aufgesetzten elektrischen oder elektronischen Gerät;
- Fig. 4: eine weitere perspektivische Ansicht auf ein Ausführungsbeispiel der erfindungsgemäßen Adaptervorrichtung mit darin eingesetzten Sicherungselementen;
- Fig. 5: eine Seitenansicht auf das in Fig. 4 dargestellte Ausführungsbeispiel einer erfindungsgemäßen Adaptervorrichtung mit darin eingesetzten Sicherungselementen;
- Fig. 6: eine Darstellung ohne obere Gehäusehälfte bei der in den Figuren 4 und 5 dargestellte Adaptervorrichtung ohne eingesetzte Sicherungselemente;
- Fig. 7, 8: Detailansichten eines V-förmigen Kontaktes, der bei der in den Figuren 4, 5, 6 dargestellten Adaptervorrichtung verwendet wird;
- Fig. 9: eine Ansicht auf ein Ausführungsbeispiel der erfindungsgemäßen Adaptervorrichtung mit geöffneter Klappe zum Austauschen von Sicherungselementen;
- Fig. 10: eine perspektivische Darstellung eines weiteren Ausführungsbeispiels der erfindungsgemäßen Adaptervorrichtung;
- Fig. 11: eine perspektivische Darstellung eines Ausführungsbeispiels der erfindungsgemäßen Adaptervorrichtung, die auf einem Sammelschienenadapter aufgesetzt ist;
- Fig. 12: eine perspektivische Darstellung eines Ausführungsbeispiels einer erfindungsgemäßen Adaptervorrichtung, die auf einem separaten Hutschienenadapter aufgesetzt ist;
- Fig. 13: eine perspektivische Ansicht auf mehrere Adaptervorrichtungen gemäß der Erfindung, die sich auf einem speziellen, berührungsgeschützt abgedeckten Stromsammelschienensystem befinden.

Im Weiteren werden bevorzugte Ausführungsformen der erfindungsgemäßen Adaptervorrichtung und des erfindungsgemäßen Stromsammelschienensystems unter Bezugnahme auf die Figuren detailliert beschrieben.

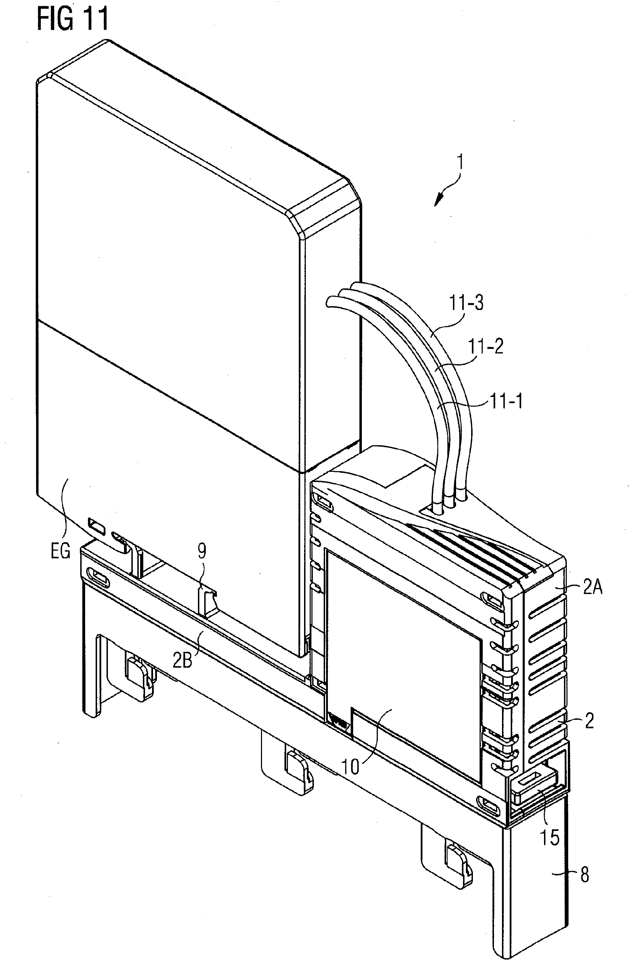

Fig. 2 zeigt exemplarisch eine Schaltungsanordnung zur Erläuterung der erfindungsgemäßen Adaptervorrichtung. Die Adaptervorrichtung 1 dient zum Anschluss eines elektrischen Gerätes EG an ein Stromsammelschienensystem, welches mehrere Stromsammelschienen SS besitzt. Bei der in Fig. 2 dargestellten Schaltungsanordnung weist das Stromsammelschienensystem drei Stromsammelschienen SS1, SS2, SS3 auf, welche drei Stromphasen L1, L2, L3 führen. Bei einer möglichen Ausführungsform kann das Gerät auch auf ein fünfpoliges Sammelschienensystem mit PE und N Leiter aufgesetzt werden und diese Leiter mit dem EG verbunden werden. Bei der in Fig. 2 dargestellten Schaltungsanordnung umfasst das elektronische Gerät EG einen daran angeschlossenen Verbraucher bzw. Last. In dem dargestellten Beispiel ist die durch das elektronische Gerät EG angesteuerte Last ein Elektromotor M. Das elektronische Gerät EG kann über ein Systeminterface SYS mit einem Systembus einer elektrischen Anlage verbunden sein. Die erfindungsgemäße Adaptervorrichtung 1 eignet sich für verschiedenste Arten von elektrischen oder elektronischen Geräten EG, beispielsweise wie in Fig. 2 dargestellt für ein Motorsteuergerät. Alternativ kann es sich bei dem Gerät EG auch um einen Schutzschalter, ein Netzteil oder beispielsweise ein Messgerät handeln. Die Adaptervorrichtung 1 hat ein in Fig. 2 gestrichelt dargestelltes Adaptergehäuse 2, in dem für jede Stromsammelschiene SSᵢ ein zugehöriges Sicherungselement 3-i zur elektrischen Absicherung des elektrischen bzw. elektronischen Gerätes EG vorgesehen ist. An dem Adaptergehäuse 2 der Adaptervorrichtung 1 sind einerseits elektrische Kontakte zur elektrischen Kontaktierung der verschiedenen Stromsammelschienen SS angebracht und andererseits Anschlussleitungen für das elektrische Verbinden des elektrischen bzw. elektronischen Gerätes EG mit den Sicherungselementen 3-i der Adaptervorrichtung 1 vorgesehen. Das Adaptergehäuse 2 der Adaptervorrichtung 1 weist zudem mindestens eine Gerätebefestigungseinrichtung zum mechanischen Aufsetzen des elektrischen bzw. elektronischen Gerätes EG auf das Adaptergehäuse 2 auf. Bei der in Fig. 2 beispielhaft dargestellten Schaltungsanordnung verfügt das Stromsammelschienensystem über drei im Wesentlichen parallel angeordnete Stromsammelschienen SS1, SS2, SS3 für die verschiedenen Stromphasen L1, L2, L3. Die Anzahl der in dem Adaptergehäuse 2 vorgesehenen Sicherungselemente 3-1, 3-2, 3-3 entspricht der Anzahl der Stromsammelschienen bzw. Stromphasen. Die Sicherungselemente 3-i sind bei einer möglichen Ausführungsform Schmelzsicherungen. Die Sicherungselemente 3-i sind vorzugsweise manuell austauschbar. Die Sicherungselemente 3-i sind vorzugsweise in einer Aufnahmekammer 2A des Adaptergehäuses 2 vorgesehen. Alternativ können auch eine oder mehrere Sicherungsschublade(n) zur Aufnahme der Sicherungen vorgesehen werden, die vorzugsweise von vorne oder unten in das Gerät eingeschoben werden kann. An diese Aufnahmekammer 2A ist vorzugsweise ein Steg 2B angeformt, der eine Gerätebefestigungseinrichtung 9 trägt. Diese Gerätebefestigungseinrichtung 9 ist bei einer möglichen Ausführungsform eine an das Adaptergehäuse 2 angebrachte Hutschiene. Bei einer möglichen Ausführungsform ist die Gerätebefestigungseinrichtung zum Aufsetzen des elektrischen bzw. elektronischen Gerätes EG an das Adaptergehäuse 2 der Adaptervorrichtung 1 angeformt. Die Aufnahmekammer 2A des Adaptergehäuses 2 weist vorzugsweise zur Aufnahme der verschiedenen Sicherungselemente 3-i für jedes Sicherungselement 3-i ein darin integriertes elektrisches Aufnahmekontaktpaar zum Einsetzen des jeweiligen Sicherungselementes 3-i auf. Bei der in Fig. 2 dargestellten Schaltungsanordnung befindet sich in der Aufnahmekammer 2A des Adaptergehäuses 2 für jedes der drei Sicherungselemente 3-1, 3-2, 3-3 ein zugehöriges Aufnahmekontaktpaar zum Austausch des jeweiligen Sicherungselementes. Dieses Aufnahmekontaktpaar besitzt einen ersten Aufnahmekontakt 4-i und einen zweiten Aufnahmekontakt 5-i. Bei der in Fig. 2 dargestellten Schaltungsanordnung ist das erste Sicherungselement 3-1 für die erste Stromphase L1 zwischen dem ersten Aufnahmekontakt 4-1 und dem zweiten Aufnahmekontakt 5-1 eingesetzt. Dementsprechend ist das zweite Sicherungselement 3-2 für die zweite Stromphase L2 zwischen einem ersten Aufnahmekontakt 4-2 und einem zweiten Aufnahmekontakt 5-2 eingesetzt. Ferner wird das dritte Sicherungselement 3-3 für die dritte Phase L3 zwischen einem ersten Aufnahmekontakt 4-3 und einem zweiten Aufnahmekontakt 5-3 eingesetzt. Die ersten Aufnahmekontakte 4-i sind über eine innerhalb des Adaptergehäuses 2 verlaufende Stromverbindung jeweils mit einem an dem Adaptergehäuse 2 angebrachten Kontakt 6-i zur Kontaktierung einer Stromsammelschiene SSᵢ des Stromsammelschienensystems elektrisch verbunden, wie in Fig. 2 dargestellt. Diese Kontakte 6-i sind vorzugsweise als Steckkontaktierung ausgebildet. Die Kontakte 6-i können bei einer möglichen Ausführungsform in Aufnahmekontakte 7-i eines Stromsammelschienenadapters 8 eingesteckt werden, welcher auf die Stromsammelschienen SS des Stromsammelschienensystems aufgesetzt ist. Figur 11 zeigt perspektivisch ein Ausführungsbespiel eines Stromsammelschienenadapters 8. Bei einer weiteren möglichen Ausführungsform sind die Kontakte zur elektrischen Kontaktierung der Stromsammelschienen SS in entsprechende Kontaktöffnungen eines Kontaktöffnungsrasters der Stromsammelschienen des Stromsammelschienensystems einführbar. Die Kontakte zur elektrischen Kontaktierung der Stromsammelschienen SS können bei einer möglichen Ausführungsform selbstfedernd ausgebildet sein. Alternativ sind die Kontakte zur elektrischen Kontaktierung der Stromsammelschienen SS mittels einer Feder fremdgefedert.

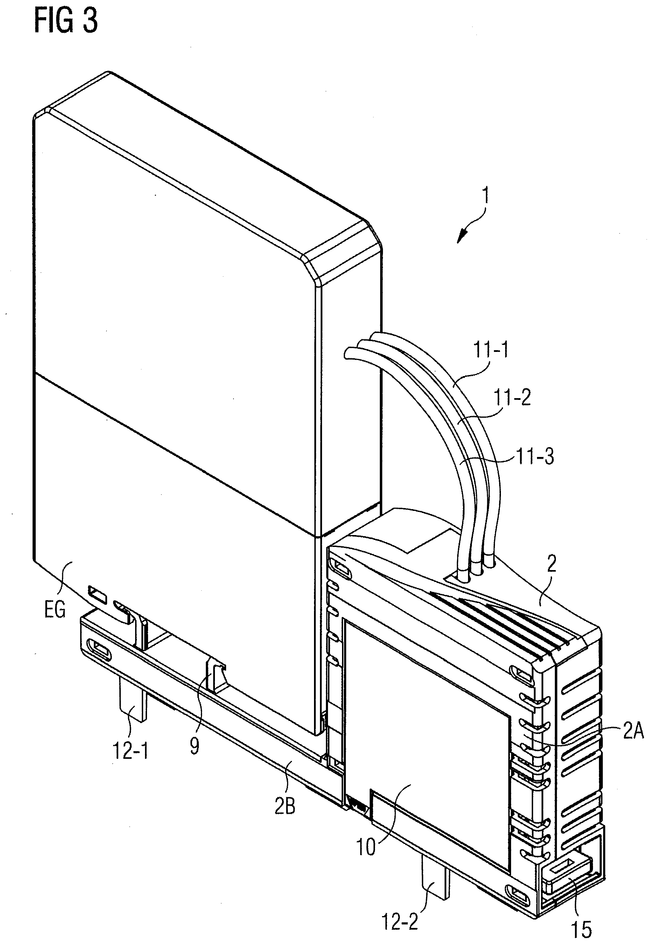

Fig. 3 zeigt eine perspektivische Ansicht auf ein Ausführungsbeispiel der erfindungsgemäßen Adaptervorrichtung 1, auf die ein elektrisches Gerät EG aufgesetzt ist. Wie man in Fig. 3 erkennen kann, umfasst das Adaptergehäuse 2 der Adaptervorrichtung 1 eine Aufnahmekammer 2A zur Aufnahme der Sicherungselemente, an welche ein Steg 2B angebracht ist, der eine Gerätebefestigungseinrichtung 9 trägt. Der Steg 2B ist vorzugsweise an die Aufnahmekammer 2A angeformt. Diese Gerätebefestigungseinrichtung 9 erlaubt es, das elektrische Gerät EG auf das Adaptergehäuse 2 der Adaptervorrichtung 1 aufzusetzen bzw. mit dem Adaptergehäuse 2 mechanisch zu verbinden. Bei dem in Fig. 3 dargestellten Ausführungsbeispiel ist die Gerätebefestigungseinrichtung 9 eine an dem Adaptergehäuse 2 angeformte Hutschiene. Bei dem in Fig. 3 dargestellten Ausführungsbeispiel ist an dem Steg 2B eine Gerätebefestigungseinrichtung 9 angebracht. Bei einer alternativen Ausführungsform kann die Anzahl der vorgesehenen Gerätebefestigungseinrichtungen 9 variieren. Andere Befestigungsmöglichkeiten des elektrischen Gerätes EG sind ebenfalls möglich, insbesondere Anschraubelemente, Rastelemente an Vorder- und Rückseite des EGs. Der Steg 2B ist vorzugsweise an die Aufnahmekammer 2A des Adaptergehäuses 2 angeformt. Die Sicherungselemente 3-i sind vorzugsweise über eine in der Aufnahmekammer 2A vorgesehene Klappe 10 austauschbar. Die Austauschklappe 10 ist in Fig. 3 geschlossen dargestellt. Für die Aufnahmekammer 2A sind bei dem in Fig. 3 dargestellten Ausführungsbeispiel drei Anschlussleitungen 11-1, 11-2, 11-3 für die drei verschiedenen Stromphasen L1, L2, L3 dargestellt. Weiterhin können noch Anschlussleitungen für N und PE Leiter vorgesehen sein. Die Anschlussleitungen 11-1, 11-2, 11-3 dienen zur elektrischen Verbindung des elektronischen bzw. elektrischen Gerätes EG mit den innerhalb der Aufnahmekammer 2A vorgesehenen Sicherungselementen 3-1, 3-2, 3-3 der Adaptervorrichtung 1. Bei dem in Fig. 3 dargestellten Ausführungsbeispiel verfügt das Adaptergehäuse 2 ferner über Zapfen 12-1, 12-2, die ein fehlerhaftes Einsetzen der Adaptervorrichtung 1 in einen Sammelschienenadapter oder ein berührungsgeschütztes Sammelschienensystem verhindern können. In Fig. 3 ist ferner an der Vorderseite ein Betätigungsrastelement 15 erkennbar.

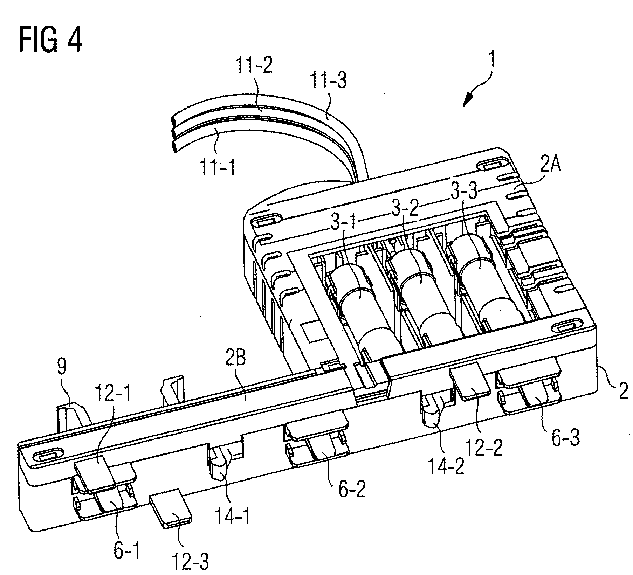

Fig. 4 zeigt in einer perspektivischen Ansicht die in Fig. 3 dargestellte Adaptervorrichtung 1 liegend von unten ohne aufgesetztes elektronisches Gerät EG. In Fig. 4 ist die Klappe 10 zum Austausch der Sicherungselemente 3-i entfernt. In der Aufnahmekammer 2A des Adaptergehäuses 2 befinden sich drei Sicherungselemente 3-1, 3-2, 3-3 für verschiedene Stromphasen L.

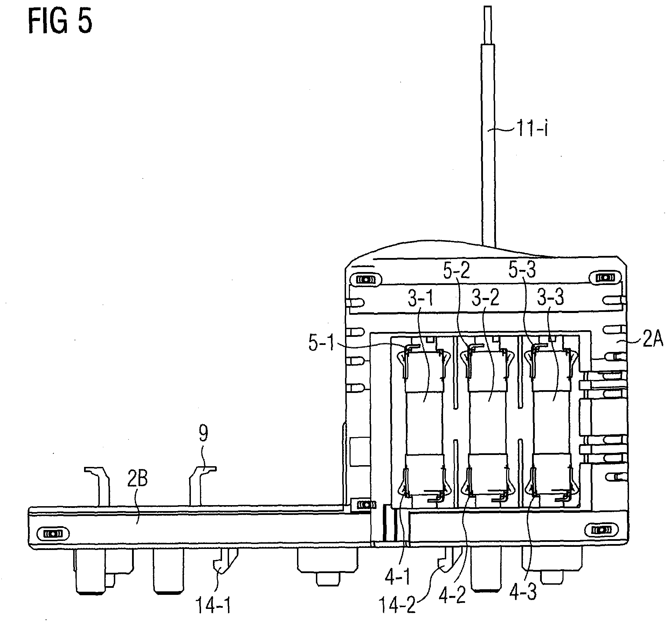

Fig. 5 zeigt eine Seitenansicht auf die in Fig. 4 liegend dargestellte Adaptervorrichtung 1 mit eingesetzten Sicherungselementen 3-1, 3-2, 3-3 und den entsprechenden Aufnahmekontaktpaaren 4, 5.

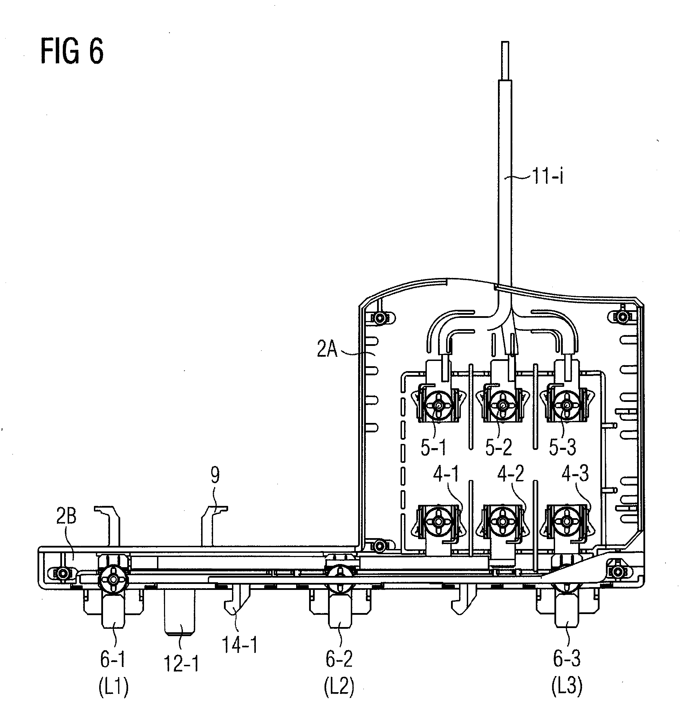

Fig. 6 zeigt eine Schnittansicht durch das Adaptergehäuse 2 der Adaptervorrichtung 1. In Fig. 6 sind die Sicherungselemente 3-i aus den Aufnahmekontaktpaaren entfernt. Die ersten Aufnahmekontakte 4-i sind jeweils über eine innerhalb des Adaptergehäuses 2 verlaufende interne Stromverbindung mit einem an dem Adaptergehäuse 2 angebrachten elektrischen Kontakt 6-i zur Kontaktierung einer Stromsammelschiene SS des Stromsammelschienensystems elektrisch verbunden, wie in Fig. 6 dargestellt. Die zweiten Aufnahmekontakte 5-i der Aufnahmekontaktpaare sind jeweils mit einer Anschlussleitung 11-i für den elektrischen Anschluss des elektronischen bzw. elektrischen Gerätes EG verbunden, wie in Fig. 6 dargestellt.

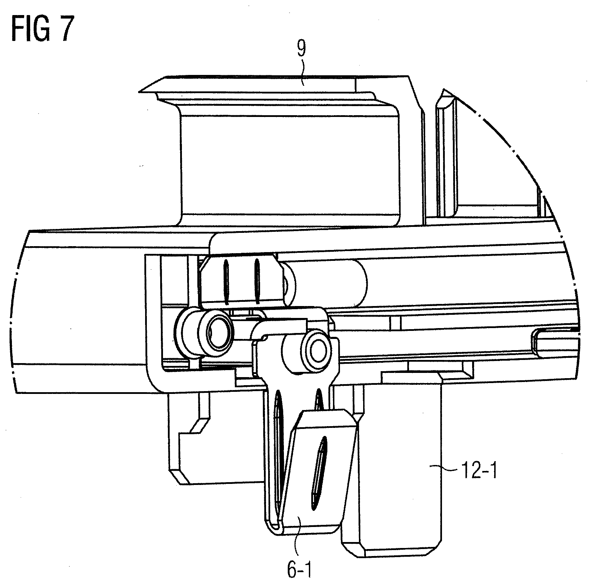

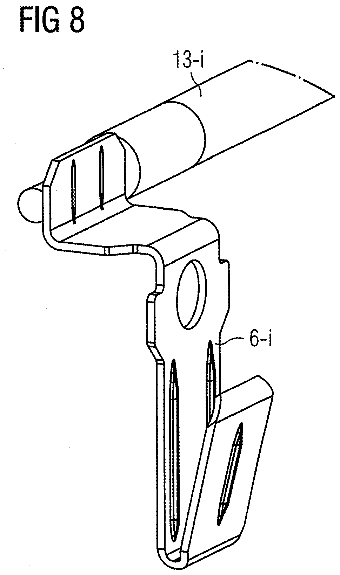

Fig. 7 zeigt eine Detailansicht auf einen der elektrischen Kontakte 6-i zur direkten oder indirekten Kontaktierung einer Stromsammelschiene. Wie in Fig. 8 dargestellt, ist der elektrische Kontakt 6-i vorzugsweise V-förmig ausgebildet. Der elektrische Kontakt 6-i ist vorzugsweise selbstfedernd ausgebildet. Alternativ kann der elektrische Kontakt 6-i auch mittels einer Feder fremdgefedert sein. Der elektrische Kontakt 6-i ist über eine elektrische Leitung 13-i mit einem entsprechenden ersten Aufnahmekontakt 4-i eines Aufnahmekontaktpaares elektrisch verbunden. Diese Leitung 13-i zwischen dem elektrischen Kontakt 6-i und dem Aufnahmekontakt 4-i verläuft innerhalb des Adaptergehäuses 2 der Adaptervorrichtung 1.

Wie in den Figuren 4, 5, 6 erkennbar, sind an der Unterseite des Gehäuses 2 vorzugsweise zusätzlich Rastelemente 14-1, 14-2 zum Aufrasten auf ein anderes Gehäuse oder Bauelement vorgesehen. Die Rastelemente bzw. Rastmittel weisen bei einer möglichen Ausführungsform Rastnasen auf, die durch Öffnungen des Adaptergehäuses 2 herausragen. Diese Rastmittel sind bei einer möglichen Ausführungsform zum Ver- und/oder Entriegeln des auf ein anderes Bauelement und/oder auf die Stromsammelschienen aufgerasteten Adaptergehäuses 2 lateral verschiebbar. Die Rastmittel bzw. Rastelemente können bei einer möglichen Ausführungsform mittels eines an einer Stirnseite des Adaptergehäuses 2 vorgesehenen Betätigungselementes 15, wie es in Fig. 3 dargestellt ist, zum Ver- oder Entriegeln durch einen Nutzer betätigt werden.

Das Adaptergehäuse 2 der Adaptervorrichtung 1 ist vorzugsweise schmal ausgebildet, wie in Fig. 3 dargestellt. Es besteht bei einer möglichen Ausführungsform aus einem elektrisch isolierenden Kunststoff. Das Adaptergehäuse 2 besitzt eine schmale Stirnseite, die vorzugsweise eine Breite von 22,5 mm, eine Breite von 18 mm, eine Breite von 36 mm oder eine Breite von 45 mm aufweist. Der an die Anschlussleitungen 11-i der Adaptervorrichtung 1 angebrachte Gerätestecker ist vorzugsweise in eine entsprechende Gerätebuchse des auf die Adaptervorrichtung 1 mechanisch aufgesetzten Gerätes manuell einsteckbar.

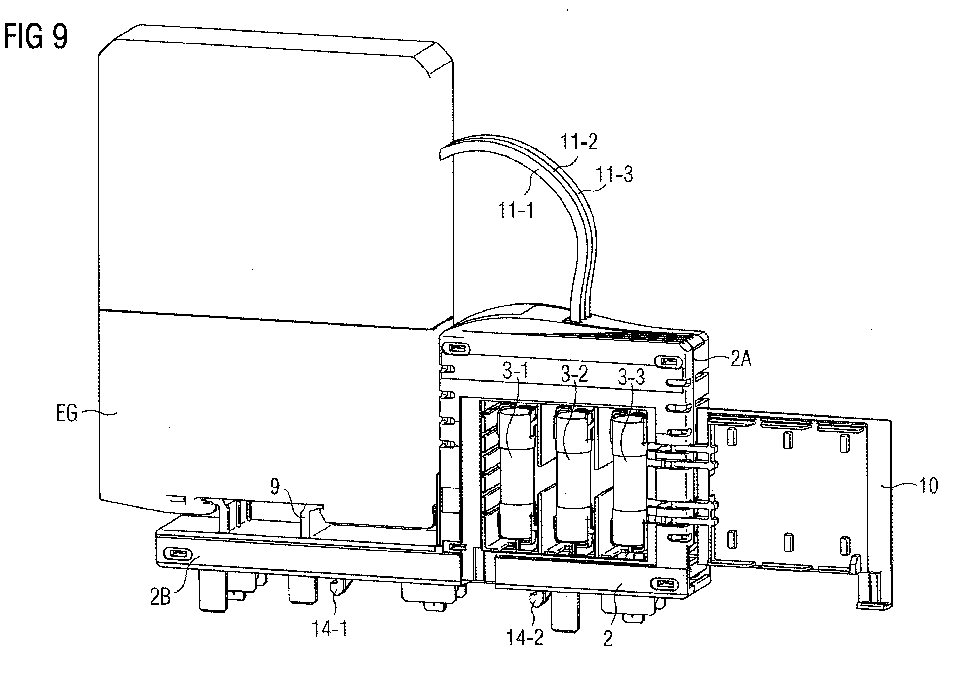

Fig. 9 zeigt eine weitere Ansicht auf ein Ausführungsbeispiel der erfindungsgemäßen Adaptervorrichtung 1, wobei die Klappe 10 zum Auswechseln der Sicherungselemente 3-i seitlich aus der Aufnahmekammer 2A des Adaptergehäuses 2 herausgeschwenkt ist.

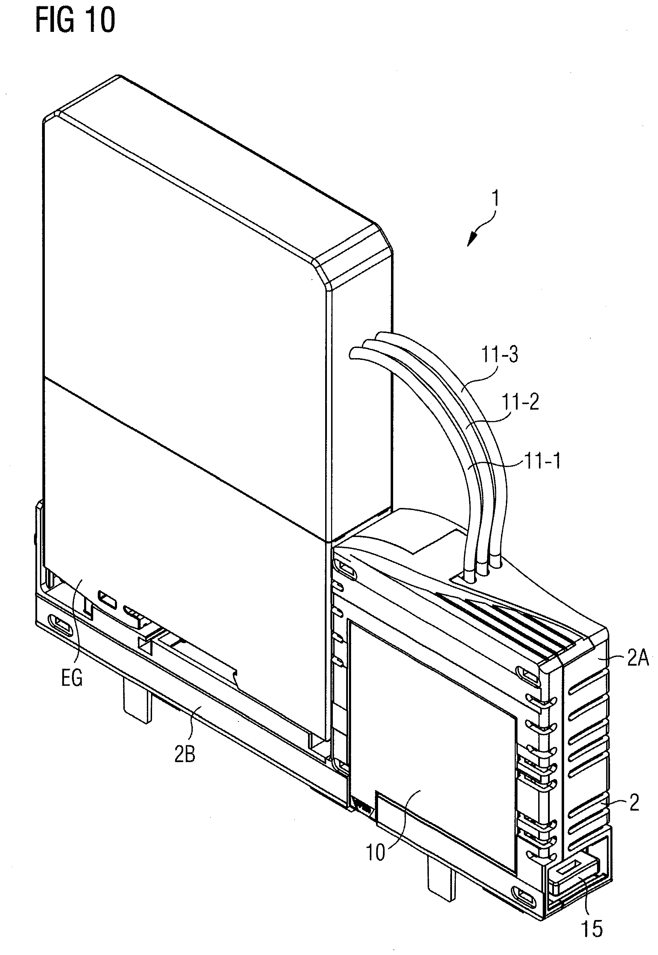

Fig. 10 zeigt ein weiteres Ausführungsbeispiel der erfindungsgemäßen Adaptervorrichtung 1, wobei bei dem dargestellten Ausführungsbeispiel die Gerätebefestigungseinrichtung individuell an ein bestimmtes anzubringendes elektronisches Endgerät EG angepasst ist.

Fig. 11 zeigt perspektivisch ein Ausführungsbeispiel der erfindungsgemäßen Adaptervorrichtung 1, die auf einen weiteren Adapter 8 aufgesteckt ist. Hierzu werden die elektrischen Kontakte 6-i, wie sie beispielsweise in Fig. 6 dargestellt sind, in entsprechende Aufnahmekontakte des anderen Adapters 8 zur elektrischen Kontaktierung eingesteckt. Bei dem in Fig. 11 dargestellten weiteren Adapter 8 handelt es sich um einen Stromsammelschienenadapter, der direkt auf drei Stromsammelschienen eines Stromsammelschienensystems SS aufgesetzt werden kann.

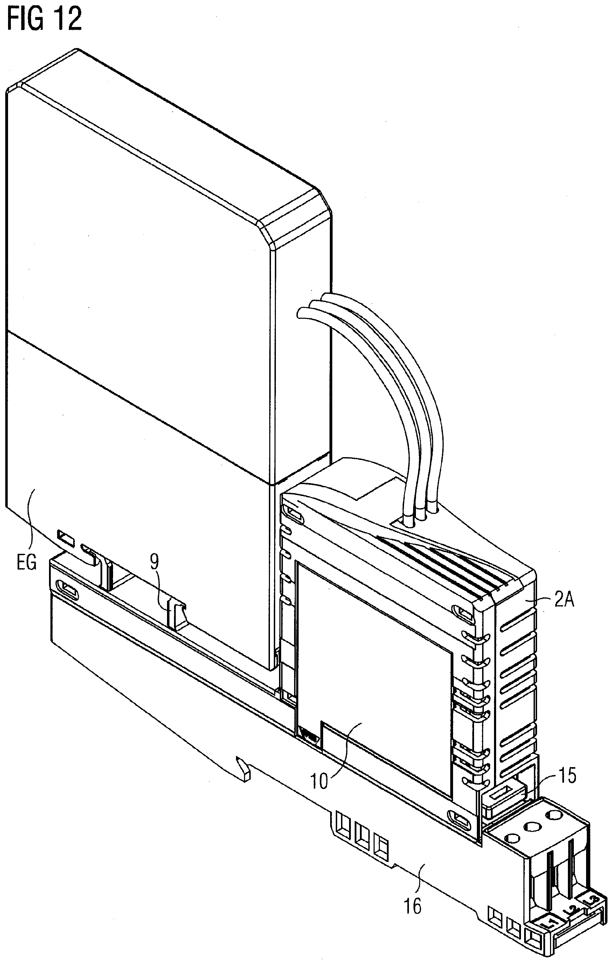

Fig. 12 zeigt eine weitere Ansicht auf ein Ausführungsbeispiel der erfindungsgemäßen Adaptervorrichtung 1, wobei hier die Adaptervorrichtung 1 auf einen Hutschienenadapter 16 aufgesetzt ist. Wie man aus den Figuren 11, 12 erkennen kann, kann die erfindungsgemäße Adaptervorrichtung 1 mit weiteren Adaptern, beispielsweise mit dem in Fig. 11 dargestellten Stromsammelschienenadapter 8 oder dem in Fig. 12 dargestellten Hutschienenadapter 16, verbunden werden, sodass ein modulares System gebildet werden kann.

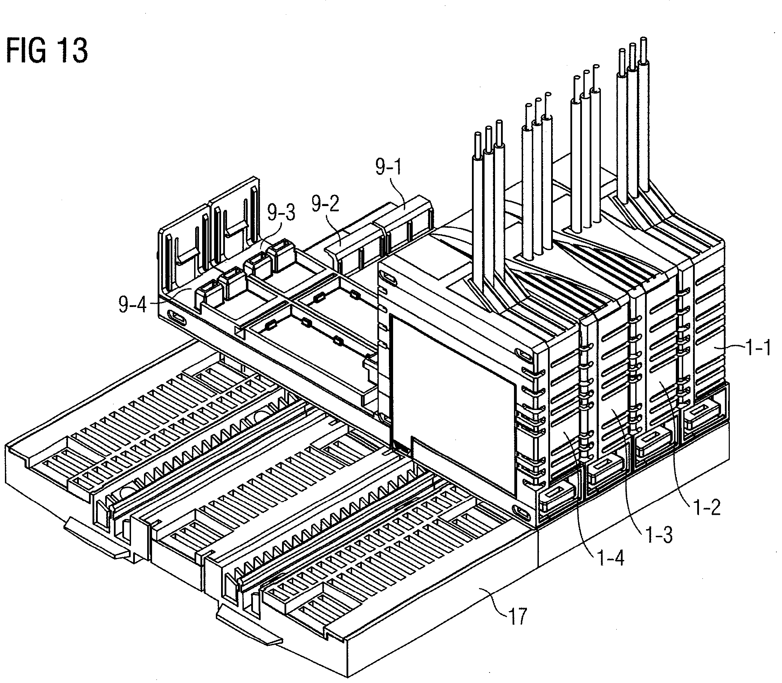

Fig. 13 zeigt mehrere erfindungsgemäße Adaptervorrichtungen 1-i, die auf ein spezielles, berührungsgeschützt abgedecktes Stromsammelschienensystem 17 aufgesetzt sind, in dem sich drei bzw. 5 (PE und N) parallele Stromsammelschienen SS des Stromsammelschienensystems befinden. In Fig. 13 sind zwei Adaptervorrichtungen 1-1, 1-2 eines ersten Typs dargestellt und zwei Adaptervorrichtungen 1-3, 1-4 eines zweiten Typs. Die Adaptervorrichtungen 1-1, 1-2 des ersten Typs bzw. der ersten Ausführungsform verfügen als Gerätebefestigungseinrichtungen jeweils über eine Hutschiene 9-1, 9-2, wie in Fig. 13 dargestellt. Die beiden anderen Adaptervorrichtungen 1-3, 1-4 verfügen als Gerätebefestigungseinrichtungen über individuelle Befestigungseinrichtungen 9-3, 9-4 zur Befestigung eines bestimmten elektronischen Gerätes EG mit einem besonders ausgeformten Gehäuse. Die elektrischen Kontakte 6-i auf der Unterseite der Adaptervorrichtungen 1-i können in entsprechende Schlitze des frontseitigen Berührungsschutzes des speziellen Stromsammelschienensystems 17 eingesteckt werden, um die dahinter befindlichen Stromsammelschienen SS elektrisch zu kontaktieren. Wie man aus Fig. 13 erkennen kann, kann eine Vielzahl von aneinanderliegender Adaptervorrichtungen 1-i für unterschiedliche elektrische Geräte EG platzsparend eng aneinanderliegend auf ein spezielles Sammelschienensystem 17 montiert werden, indem man die Adaptervorrichtungen 1-i aufsteckt. Hierdurch ist die Montage besonders platzsparend, aber auch zeitsparend. Darüber hinaus ist die elektrische Kontaktierung der Stromsammelschienen SS für einen Nutzer besonders sicher, da sichergestellt ist, dass der Nutzer an keiner Stelle eine Leitung berührt, die einen elektrischen Strom führt. Die an der Unterseite des Adaptergehäuses 2 angebrachten Kodierzapfen bzw. Kodierelemente verhindern zusätzlich, dass die Adaptervorrichtung 1 durch einen Nutzer bzw. Monteur falsch herum montiert werden kann. Die erfindungsgemäße Adaptervorrichtung 1 bietet somit eine einfache, sichere und schnelle Montage eines elektrischen Gerätes EG auf ein Stromsammelschienensystem. Darüber hinaus erlaubt die erfindungsgemäße Adaptervorrichtung 1 eine besonders platzsparende Montage, sodass eine Vielzahl unterschiedlicher elektrischer bzw. elektronischer Geräte auf engstem Raum an das Stromsammelschienen angeschlossen werden können. Die in die erfindungsgemäße Adaptervorrichtung 1 eingesetzten Sicherungselemente 3-i lassen sich bei Bedarf schnell austauschen und bieten eine individuelle Absicherung der verschiedenen Stromphasen L für die individuellen elektrischen Geräte EG. Weiterhin bietet die erfindungsgemäße Adaptervorrichtung 1 den Vorteil, dass sie mit weiteren andersartigen Adaptern kombiniert werden kann, insbesondere mit einem Stromsammelschienenadapter 8, wie er in Fig. 11 dargestellt ist, oder einem Hutschienenadapter 16, wie er in Fig. 12 dargestellt ist.

## Patentansprüche

1. Adaptervorrichtung (1) zum Anschluss mindestens eines elektrischen oder elektronischen Gerätes (EG) an mindestens eine Stromsammelschiene (SS) eines Stromsammelschienensystems, mit
einem Adaptergehäuse (2), in dem für jede Stromsammelschiene (SS) ein zugehöriges Sicherungselement (3-i) zur elektrischen Absicherung des jeweiligen Gerätes (EG) vorgesehen ist, wobei an dem Adaptergehäuse (2) einerseits Kontakte zur elektrischen Kontaktierung der Stromsammelschienen (SS) angebracht sind, die mit den Sicherungselementen (3-i) verbunden sind, und andererseits Anschlussleitungen (11-i) für das elektrische Verbinden des jeweiligen Gerätes (EG) mit den Sicherungselementen (3-i) der Adaptervorrichtung (1) vorgesehen sind, **dadurch gekennzeichnet, dass** an dem Adaptergehäuse (2) mindestens eine Gerätebefestigungseinrichtung (9) zum Aufsetzen des Gerätes (EG) auf das Adaptergehäuse (2) vorgesehen ist, wobei das Adaptergehäuse (2) eine Aufnahmekammer (2A) zur Aufnahme der Sicherungselemente (3-i) aufweist, an welche ein Steg (2B) angeformt ist, der die Gerätebefestigungseinrichtung (9) trägt.

2. Adaptervorrichtung nach Anspruch 1,
wobei die Gerätebefestigungseinrichtung (9) eine an dem Adaptergehäuse (2) angebrachte Hutschiene aufweist.

3. Adaptervorrichtung nach Anspruch 1 oder 2,
wobei die Gerätebefestigungseinrichtung (9) an den Steg (2B) angeformt ist.

4. Adaptervorrichtung nach einem der vorangehenden Ansprüche 1 bis 3,
wobei die Sicherungselemente (3-i) Schmelzsicherungen sind.

5. Adaptervorrichtung nach einem der Ansprüche 1 bis 5, wobei die Aufnahmekammer (2A) des Adaptergehäuses (2) zur Aufnahme der Sicherungselemente (3-i) mindestens ein darin integriertes elektrisches Aufnahmekontaktpaar (4-i, 5-i) zum Einsetzen eines Sicherungselementes (3-i) aufweist,
wobei ein erster Aufnahmekontakt (4-i) des Aufnahmekontaktpaares über eine innerhalb des Adaptergehäuses (2) verlaufende Stromverbindung mit einem an dem Adaptergehäuse (2) angebrachten Kontakt (6-i) zur Kontaktierung einer Stromsammelschiene (SS) des Stromsammelschienensystems elektrisch verbunden ist und ein zweiter Aufnahmekontakt (5-i) des Aufnahmekontaktpaares mit einer Anschlussleitung (11-i) für den elektrischen Anschluss des Gerätes (EG) vorgesehen ist.

6. Adaptervorrichtung nach einem der vorangehenden Ansprüche 1 bis 5,
wobei die Sicherungselemente (3-i) über eine in der Aufnahmekammer (2A) des Adaptergehäuses (2) vorgesehene Klappe (10) manuell austauschbar sind.

7. Adaptervorrichtung nach einem der vorangehenden Ansprüche 1 bis 6,
wobei die Kontakte (6-i) zur elektrischen Kontaktierung der Stromsammelschienen (SS) in entsprechende Kontaktöffnungen eines Kontaktöffnungsrasters der Stromsammelschienen (SS) einführbar sind.

8. Adaptervorrichtung nach einem der vorangehenden Ansprüche 1 bis 7,
wobei die Kontakte (6-i) zur elektrischen Kontaktierung der Stromsammelschienen (SS) selbstfedernd ausgebildet sind oder mittels einer Feder fremdgefedert sind.

9. Adaptervorrichtung nach einem der vorangehenden Ansprüche 1 bis 8,
wobei an dem Adaptergehäuse (2) Rastmittel (14) zum mechanischen Aufrasten des Adaptergehäuses (2) auf die Stromsammelschienen (SS) des Stromsammelschienensystems vorgesehen sind, wobei die Rastmittel (14) vorzugsweise Rastnasen aufweisen, die durch Öffnungen des Adaptergehäuses (2) herausragen.

10. Adaptervorrichtung nach Anspruch 9, wobei das Rastmittel (14) sich zum Ver- und Entriegeln des auf die Stromsammelschienen (SS) oder einen weiteren Adapter aufgerasteten Adaptergehäuses (2) lateral verschieben lässt, wobei das Rastmittel (14) vorzugsweise mittels eines an einer Stirnseite des Adaptergehäuses (2) vorgesehenen Betätigungselementes (15) zum Ver- oder Entriegeln des auf die Stromsammelschienen (SS) oder einen weiteren Adapter aufgerasteten Adaptergehäuses (2) durch einen Nutzer betätigbar ist.

11. Adaptervorrichtung nach einem der vorangehenden Ansprüche 1 bis 10,
wobei das Adaptergehäuse (2) schmal ausgebildet ist und aus elektrisch isolierendem Kunststoff besteht.

12. Stromsammelschienensystem mit mehreren im Wesentlichen parallel zueinander verlaufenden Stromsammelschienen (SS), die jeweils ein Kontaktöffnungsraster mit Kontaktöffnungen aufweisen, in welche Kontakte (6) einer Adaptervorrichtung (1) nach einem der vorangehenden Ansprüche 1 bis 11 zum Anschluss mindestens eines darauf aufgesetzten Gerätes (EG) an das Stromsammelschienensystem eingeführt sind.

13. Stromsammelschienensystem nach Anspruch 12,
wobei die in dem Adaptergehäuse (2) der Adaptervorrichtung (1) vorgesehenen Sicherungselemente (3-i) das an das Stromsammelschienensystem angeschlossene Gerät (EG) individuell elektrisch absichern.

14. Stromsammelschienensystem nach einem der vorangehenden Ansprüche 12 oder 13,
wobei für jede Stromphase (L) ein zugehöriges Sicherungselement (3-i) zur elektrischen Absicherung des jeweiligen Gerätes (EG) in dem Adaptergehäuse (2) der Adaptervorrichtung (1) vorgesehen ist.

15. Stromsammelschienensystem nach einem der vorangehenden Ansprüche 13 bis 14,
wobei die Stromsammelschienen (SS) des Stromsammelschienensystems ein U-förmiges Profil mit oder ohne zwei Seitenwangen aufweisen.

## Claims

1. Adapter device (1) for connecting at least one electrical or electronic unit (EG) to at least one current collecting rail (SS) of a current collecting rail system, said adapter device having
an adapter housing (2), and an associated protective element (3-i) for electrically protecting the respective unit (EG) is provided in said adapter housing, wherein on the one hand contacts for electrically contacting the current collecting rails (SS) are attached to the adapter housing (2), and said contacts are connected to the protective elements (3-i), and on the other hand connecting lines (11-i) are provided for electrically connecting the respective unit (EG) to the protective elements (3-i) of the adapter device (1), **characterised in that** at least one unit fastening device (9) is provided on the adapter housing (2) so as to place the unit (EG) onto the adapter housing (2), wherein the adapter housing (2) comprises a receiving chamber (2A) for receiving the protective elements (3-i) and a bar (2B) is moulded onto said receiving chamber and said bar supports the unit fastening device (9).

2. Adapter device according to claim 1,
wherein the unit fastening device (9) comprises a top-hat rail that is attached to the adapter housing (2).

3. Adapter device according to claim 1 or 2,
wherein the unit fastening device (9) is moulded onto the bar (2B).

4. Adapter device according to any one of the preceding claims 1 to 3,
wherein the protective elements (3-i) are safety fuses.

5. Adapter device according to any one of claims 1 to 5,
wherein the receiving chamber (2A) of the adapter housing (2) for receiving the protective elements (3-i) comprises at least one electrical receiving contact pair (4-i, 5-i) for inserting a protective element (3-i) and said electrical receiving contact pair is integrated into said receiving chamber,
wherein a first receiving contact (4-i) of the receiving contact pair is electrically connected via a current connection, which extends within the adapter housing (2), to a contact (6-i) that is attached to the adapter housing (2) so as to contact a current collecting rail (SS) of the current collecting rail system and a second receiving contact (5-i) of the receiving contact pair is provided with a connecting line (11-i) so as to electrically connect the unit (EG).

6. Adapter device according to any one of the preceding claims 1 to 5,
wherein the protective elements (3-i) may be manually exchanged via a flap (10) that is provided in the receiving chamber (2A) of the adapter housing (2).

7. Adapter device according to any one of the preceding claims 1 to 6,
wherein the contacts (6-i) may be inserted into corresponding contact openings of a contact opening grid of the current collecting rails (SS) so as to electrically contact the current collecting rails (SS).

8. Adapter device according to any one of the preceding claims 1 to 7,
wherein the contacts (6-i) for electrically contacting the current collecting rails (SS) are configured so as to be self-resilient or their resilience is provided externally by means of a resilient element.

9. Adapter device according to any one of the preceding claims 1 to 8,
wherein latching means (14) are provided on the adapter housing (2) so as to mechanically latch the adapter housing (2) onto the current collecting rails (SS) of the current collecting rail system, wherein the latching means (14) preferably comprise latching lugs that protrude through openings of the adapter housing (2).

10. Adapter device according to claim 9, wherein the latching means (14) may displace laterally so as to lock and unlock the adapter housing (2) that is latched onto the current collecting rails (SS) or a further adapter, wherein it is preferred that the latching means (14) may preferably be actuated by a user by means of an actuating element (15) that is provided on an end face of the adapter housing (2) so as to lock and unlock the adapter housing (2) that is latched onto the current collecting rails (SS) or a further adapter.

11. Adapter device according to any one of the preceding claims 1 to 10,
wherein the adapter housing (2) is configured as narrow and is configured from electrically insulating synthetic material.

12. Current collecting rail system having multiple current collecting rails (SS) that extend essentially parallel to one another and that in each case comprise a contact opening grid having contact openings and contacts (6) of an adapter device (1) according to any one of the preceding claims 1 to 11 are inserted into said contact openings so as to connect at least one unit (EG) that is placed on the adapter housing to the current collecting rail system.

13. Current collecting rail system according to claim 12, wherein the protective elements (3-i) that are provided in the adapter housing (2) of the adapter device (1) individually electrically protect the unit (EG) that is connected to the current collecting rail system.

14. Current collecting rail system according to any one of the preceding claims 12 or 13,
wherein an associated protective element (3-i) is provided in the adapter housing (2) of the adapter device (1) for each current phase (L) so as to electrically protect the respective unit (EG).

15. Current collecting rail system according to any one of the preceding claims 13 to 14,
wherein the current collecting rails (SS) of the current collecting rail system comprise a U-shaped profile with or without two side walls.

## Revendications

1. Dispositif adaptateur (1) pour raccorder au moins un appareil électrique ou électronique (EG) à au moins une barre omnibus (SS) d'un système de barre omnibus, comprenant :
un boîtier adaptateur (2), dans lequel pour chaque barre omnibus (SS) est prévu un élément de sécurité correspondant (3-i) pour la protection électrique de l'appareil respectif (EG), dans lequel, sur le boîtier d'adaptateur (2), d'une part sont appliqués des contacts pour obtenir le contact électrique des barres omnibus (SS), lesquels sont reliés aux éléments de sécurité (3-i) et, d'autre part, sont prévus des fils de raccordement (11-i) pour la liaison électrique de l'appareil respectif (EG) avec les éléments de sécurité (3-i) du dispositif adaptateur (1),
**caractérisé en ce que**, sur le boîtier d'adaptateur (2), est prévu au moins un moyen de fixation d'appareil (9) pour appliquer l'appareil (EG) sur le boîtier d'adaptateur (2), dans lequel le boîtier d'adaptateur (2) présente une chambre de réception (2A) pour recevoir les éléments de sécurité (3-i), sur laquelle est moulée une traverse (2B) qui porte le moyen de fixation d'appareil (9) .

2. Dispositif adaptateur selon la revendication 1,
dans lequel le moyen de fixation d'appareil (9) présente un profilé chapeau disposé sur le boîtier d'adaptateur (2) .

3. Dispositif adaptateur selon la revendication 1 ou 2,
dans lequel le moyen de fixation d'appareil (9) est moulé sur la traverse (2B).

4. Dispositif adaptateur selon une des revendications précédentes 1 à 3,
dans lequel les éléments de sécurité (3-i) sont des coupe-circuits à fusibles.

5. Dispositif adaptateur selon une des revendications 1 à 5, dans lequel la chambre de réception (2A) du boîtier d'adaptateur (2) présente, pour la réception des éléments de sécurité (3-i), au moins une paire de contacts de réception électriques (4-i, 5-i) intégrés à l'intérieur pour insérer un élément de sécurité (3-i),
dans lequel un premier contact de réception (4-i) de la paire de contacts de réception est reliée électriquement, par le biais d'une liaison électrique située à l'intérieur du boîtier d'adaptateur (2), à un contact (6-i) disposé sur le boîtier d'adaptateur (2) pour obtenir le contact d'une barre omnibus (SS) du système de barre omnibus et un second contact de réception (5-i) de la paire de contacts de réception est prévu avec un fil de raccordement (11-i) pour le raccordement électrique de l'appareil (EG).

6. Dispositif adaptateur selon une des revendications précédentes 1 à 5,
dans lequel les éléments de sécurité (3-i) peuvent être remplacés manuellement par le biais d'un volet (10) prévu dans la chambre de réception (2A) du boîtier d'adaptateur (2) .

7. Dispositif adaptateur selon une des revendications précédentes 1 à 6,
dans lequel les contacts (6-i) pour obtenir le contact électrique des barres omnibus (SS) peuvent être introduits dans des ouvertures de contacts correspondantes d'une trame d'ouvertures de contacts des barres omnibus (SS).

8. Dispositif adaptateur selon une des revendications précédentes 1 à 7,
dans lequel les contacts (6-i) pour obtenir le contact électrique des barres omnibus (SS) sont configurés eux-mêmes avec un ressort ou sont prévus avec un ressort non intégré.

9. Dispositif adaptateur selon une des revendications précédentes 1 à 8,
dans lequel, sur le boîtier d'adaptateur (2), sont prévus des moyens d'enclenchement (14) pour enclencher mécaniquement le boîtier d'adaptateur (2) sur les barres omnibus (SS) du système de barre omnibus, dans lequel les moyens d'enclenchement (14) présentent de préférence des nez d'enclenchement qui dépassent à travers les ouvertures du boîtier d'adaptateur (2).

10. Dispositif adaptateur selon la revendication 9, dans lequel les moyens d'enclenchement (14) peuvent se déplacer latéralement pour verrouiller et déverrouiller le boîtier d'adaptateur (2) enclenché sur les barres omnibus (SS) ou un autre adaptateur, dans lequel les moyens d'enclenchement (14) sont de préférence actionnables par un utilisateur à l'aide d'un élément d'actionnement (15) prévu sur une face frontale du boîtier d'adaptateur (2) pour verrouiller ou déverrouiller le boîtier d'adaptateur (2) enclenché sur les barres omnibus (SS) ou un autre adaptateur.

11. Dispositif adaptateur selon une des revendications précédentes 1 à 10,
dans lequel le boîtier d'adaptateur (2) est configuré étroitement et est composé d'une matière plastique isolée électriquement.

12. Système de barre omnibus comprenant plusieurs barres omnibus (SS) situées sensiblement parallèlement les unes par rapport aux autres et présentant chacune une trame d'ouvertures de contacts avec des ouvertures de contacts, dans lesquelles sont introduits des contacts (6) d'un dispositif adaptateur (1) selon une des revendications précédentes 1 à 11 pour raccorder au moins un appareil appliqué dessus (EG) au système de barre omnibus.

13. Système de barre omnibus selon la revendication 12,
dans lequel les élément de sécurité (3-i) prévus dans le boîtier d'adaptateur (2) du dispositif adaptateur (1) protègent électriquement et individuellement l'appareil (EG) raccordé au système de barre omnibus.

14. Système de barre omnibus selon une des revendications précédentes 12 ou 13,
dans lequel, pour chaque phase de courant (L), est prévu un élément de sécurité correspondant (3-i) pour la protection électrique de l'appareil respectif (EG) dans le boîtier d'adaptateur (2) du dispositif adaptateur (1).

15. Système de barre omnibus selon une des revendications précédentes 13 à 14,
dans lequel les barres omnibus (SS) du système de barre omnibus présentent un profil en forme de U avec ou sans deux parois latérales.
